# FASCICULE DE BREVET EUROPEEN

(11) **EP 2 606 969 B1**
(45) Date de publication et mention de la délivrance du brevet: **30.06.2021**
(21) Numéro de dépôt: 12290401.4
(22) Date de dépôt: 20.11.2012
(51) Int. Cl.: B01J 23/76, B01J 23/88, B01J 23/882, B01J 23/883, C10G 45/02, C10G 45/06, C10G 45/08, C10G 45/14, B01J 23/00, B01J 27/188, B01J 27/19, B01J 37/02

(54) **Adsorbant catalytique pour la captation de l'arsenic et l'hydrodésulfuration sélective des esences de craquage catalytique**
Katalytisches Adsorptionsmittel für Arsen, und selektive Hydrodesulfurierung der Essenzen des Katkrack-Verfahrens
Catalytic adsorber for arsenic collection and selective hydrodesulphurisation of catalytic cracked gasoline

(30) Priorité: 21.12.2011 FR 1104000
(43) Date de publication de la demande: 26.06.2013
(73) Titulaire: IFP Energies nouvelles, 92500 Rueil-Malmaison (FR)
(72) Inventeur: Devers, Elodie, 69007 Lyon (FR); Gaeiro, Goncalo, 1150-093 Lisboa (PT); Dulot, Hugues, 69007 Lyon (FR); Marion, Marie-Claire, 69390 Vernaison (FR); Daudin, Antoine, 69960 Corbas (FR)
(74) Mandataire: IFP Energies nouvelles

(56) Documents cités:
- EP-A1- 1 090 682
- GB-A- 1 511 900
- US-A- 4 152 250
- US-A1- 2003 111 391
- US-A1- 2010 155 301
- None

## Description

### Domaine de l'invention

La présente invention se rapporte au domaine de l'hydrotraitement des coupes essences, notamment des coupes essences issues des unités de craquage catalytique en lit fluidisé (FCC). Plus particulièrement, la présente invention concerne un adsorbant catalytique ayant les propriétés de capter l'arsenic et simultanément de désulfurer sélectivement dans le temps une charge hydrocarbonée tout en préservant un indice d'octane élevé. L'invention concerne aussi un procédé d'hydrodésulfuration sélective mettant en oeuvre ledit adsorbant catalytique.

Les spécifications sur les carburants automobiles prévoient une forte diminution de la teneur en soufre dans ces carburants, et notamment dans les essences. Cette diminution est destinée à limiter, notamment, la teneur en oxyde de soufre et d'azote dans les gaz d'échappement d'automobiles. La législation européenne précise les spécifications des carburants essences. En 2009, elles sont au maximum de 10 ppm poids (parties par millions) de soufre. Pour atteindre ces spécifications, il est nécessaire de traiter les essences par des procédés de désulfuration. Cette teneur pourrait être encore revue à la baisse dans les prochaines années.

Les sources principales de soufre dans les bases pour essences sont les essences dites de craquage, et principalement, la fraction d'essence issue d'un procédé de craquage catalytique d'un résidu de la distillation atmosphérique ou sous vide d'un pétrole brut. La fraction d'essence issue du craquage catalytique, qui représente en moyenne 40 % des bases essence, contribue en effet pour plus de 90% à l'apport de soufre dans les essences. Par conséquent, la production d'essences peu soufrées nécessite une étape de désulfuration des essences de craquage catalytique. Parmi les autres sources d'essences pouvant contenir du soufre, citons également les essences de coker, de visbreaker ou, dans une moindre mesure, les essences issues de la distillation atmosphérique ou les essences de vapocraquage.

L'élimination du soufre dans les coupes essences consiste à traiter spécifiquement ces essences riches en soufre par des procédés de désulfuration en présence d'hydrogène. On parle alors de procédés d'hydrodésulfuration (HDS). Cependant, ces coupes essences et plus particulièrement les essences issues du FCC contiennent une part importante de composés insaturés sous forme de mono-oléfines (environ 20 à 50% poids) qui contribuent à un bon indice d'octane, de dioléfines (0,5 à 5% poids) et d'aromatiques. Ces composés insaturés sont instables et réagissent au cours du traitement d'hydrodésulfuration. Les dioléfines forment des gommes par polymérisation lors des traitements d'hydrodésulfuration. Cette formation de gommes entraîne une désactivation progressive des catalyseurs d'hydrodésulfuration ou un bouchage progressif du réacteur. En conséquence, les dioléfines doivent être éliminées par hydrogénation avant tout traitement de ces essences. Les procédés de traitement traditionnels désulfurent les essences de manière non sélective en hydrogénant une grande partie des mono-oléfines, ce qui engendre une forte perte en indice d'octane et une forte consommation d'hydrogène. Les procédés d'hydrodésulfuration les plus récents permettent de désulfurer les essences de craquage riches en mono-oléfines, tout en limitant l'hydrogénation des mono-oléfines et par conséquent la perte d'octane. De tels procédés sont par exemples décrits dans les documents EP-A-1077247 et EP-A-1174485.

Les procédés d'hydrodésulfuration sont opérés de façon ininterrompue sur des durées d'au moins 3 à 5 ans. Les catalyseurs utilisés pour effectuer l'hydrodésulfuration des essences soufrées doivent donc présenter une bonne activité, une bonne sélectivité et une bonne stabilité dans le temps pour être opérés continûment pendant plusieurs années. Or, la présence de métaux lourds tels que le mercure ou l'arsenic, ou de contaminants tels que le phosphore et le silicium sous forme d'organométalliques dans les charges hydrocarbonées à désulfurer entraîne une désactivation rapide des catalyseurs d'hydrotraitement. Il est donc nécessaire d'éliminer ces contaminants de la charge avant de la mettre en contact avec ces catalyseurs d'hydrodésulfuration.

### Art Antérieur

Différentes solutions sont proposées pour extraire ces impuretés et plus particulièrement l'arsenic dans les charges hydrocarbonées. En général, un adsorbant est placé soit dans un réacteur situé en amont de l'unité d'hydrodésulfuration soit dans le réacteur d'hydrodésulfuration, en amont du lit catalytique contenant le catalyseur d'hydrodésulfuration. De tels adsorbants sont décrits dans les documents FR2794381 et WO2006/037884. Ces adsorbants sont utilisés en présence d'hydrogène, ce qui présente un inconvénient lorsque les essences à traiter comprennent des composés insaturés. Il en résulte une diminution d'indice d'octane et une baisse de la qualité de l'essence considérée dès l'étape d'adsorption des impuretés. Ces adsorbants présentent également l'inconvénient d'être catalytiquement peu actifs pour les réactions d'hydrodésulfuration. Par ailleurs, Ils occupent un volume non négligeable dans le réacteur, diminuant le volume disponible pour les lits de catalyseurs d'hydrodésulfuration et donc entraînent une perte globale des performances du procédé. Il est donc nécessaire de chercher des solutions qui permettent d'éliminer ces impuretés telles que l'arsenic, avec pour objectif de limiter les réactions d'hydrogénation responsables d'une diminution de l'indice d'octane des essences concernées. Ces solutions doivent aussi permettre d'augmenter les performances d'hydrodésulfuration et sans perte de sélectivité de la réaction d'hydrodésulfuration par rapport à l'hydrogénation des oléfines.

En ce sens, le document EP-A-2072607 décrit un procédé en lit fixe d'adsorption de l'arsenic et de désulfuration d'une charge hydrocarbonée en la mettant en contact avec un adsorbant présentant des propriétés catalytiques désulfurantes. Cet adsorbant permet de capter l'arsenic et de désulfurer une charge hydrocarbonée tout en limitant l'hydrogénation des mono-oléfines en combinant à la fois un élément du groupe VIII et un élément du groupe VIB. Cependant, au cours de son utilisation dans le temps, l'activité d'hydrodésulfuration de cet adsorbant n'est pas suffisante et diminue fortement. On observe une augmentation des réactions d'hydrogénation des mono-oléfines au détriment des réactions d'hydrodésulfuration. L'activité catalytique de cet adsorbant est très vite diminuée.

Ainsi il existe toujours un besoin de disposer d'un solide adsorbant de l'arsenic ayant des propriétés d'adsorption de métaux lourds et des propriétés catalytiques optimisées, c'est à dire présentant un bon compromis entre l'activité en hydrodésulfuration (HDS), et une sélectivité maximale de réactions d'hydrodésulfuration par rapport aux réactions d'hydrogénation des oléfines (HDS/HYD) et dont les propriétés d'adsorption et d'activité catalytique après captation soient stables dans le temps. La présente invention propose un nouvel adsorbant catalytique pour pallier les inconvénients des adsorbants de l'art antérieur.

Il est connu du document GB 1 511 900 un procédé de production d'un composite catalytique qui comprend 5 à 20% d'un métal du groupe VIB, de préférence Mo, et 0,1 à 10% d'un métal du groupe VIII, de préférence Ni et/ou Co, dans un support d'alumine, qui consiste à mélanger des solutions d'Al₂(SO₄)₃ et de NH₄OH à un pH de 5,5 à 6,5, en dissolvant le sulfate basique résultant dans un hydrosol de chlorure d'aluminium ayant un rapport AI:CI de 9:1-1.4:1, à mélanger de l''urée et de l'hexaméthylènetétramine avec l'hydrosol résultant à disperser le mélange sous forme de gouttelettes dans un bain d'huile chaude, puis à opérer le vieillissement des sphères à une température suffisante pour décomposer l'urée résiduelle et l'hexaméthylènetétramine, puis opérer le lavage, séchage et la calcination des sphères vieillies.

Il est connu du document US 2010/155301 un catalyseur comprenant au moins un métal du groupe VIB, au moins deux métaux du groupe VIII, dont l'un est le promoteur majoritaire appelé Vlll-i et le ou les autres sont appelés co-promoteur Vlll-i, avec i compris entre 2 et 5, et au moins un support constitué d'un oxyde réfractaire poreux, dans lequel les éléments du groupe VIII sont présents dans les proportions définies par le rapport atomique [VIII=1/(VIII-1+...+VIII-i)], ledit rapport étant compris entre 0,5 et 0,85.

Il est connu du document EP 1 090 682 un catalyseur d'hydrotraitement comprenant du NiO, du CoO ou du Mo0₃ associé à une matrice d'oxyde minéral. Il est aussi connu du document US 4 152 250 un catalyseur de ce type.

### Résumé et intérêt de l'invention

La présente invention concerne un adsorbant catalytique d'arsenic , ledit adsorbant comprenant au moins un métal M1 du groupe VIB et au moins deux métaux M2 et M3 du groupe VIII déposés sur un support poreux, dans lequel le rapport molaire des métaux (M2+M3)/M1 est compris entre 1 et 6, et dans lequel la teneur en métal M1 sous forme oxyde est comprise entre 4 et 10% poids par rapport au poids total de l'adsorbant, la teneur en métal M2 sous forme oxyde est compris entre 1 et 10% poids par rapport au poids total de l'adsorbant, et la teneur en métal M3 sous forme oxyde est compris entre 5 et 15% poids par rapport au poids total de l'adsorbant.

La demanderesse a constaté, de manière surprenante, qu'un adsorbant catalytique qui comprenait au moins un métal du groupe VIB et au moins deux métaux du groupe VIII présente une bonne adsorption de l'arsenic contenu dans une charge oléfinique et présente une activité d'hydrodésulfuration et une sélectivité en faveur de l'hydrodésulfuration stables dans le temps. L'association de ces trois métaux permet d'éliminer simultanément l'arsenic et le soufre d'une charge hydrocarbonée comprenant également des mono-oléfines, pendant une longue période d'utilisation, tout en limitant sélectivement l'hydrogénation des mono-oléfines contenues dans ladite charge.

Un autre objet de l'invention est un procédé d'hydrodésulfuration d'une charge hydrocarbonée dans laquelle on met en contact la charge hydrocarbonée en présence d'hydrogène avec l'adsorbant catalytique d'arsenic selon l'invention, autrement dit, un procédé d'adsorption de l'arsenic et de désulfuration d'une charge hydrocarbonée comprenant des mono-oléfines, du soufre et de l'arsenic dans lequel on met en contact, ladite charge hydrocarbonée en présence d'hydrogène avec l'adsorbant catalytique selon l'invention pour produire un effluent à basse teneur en soufre et appauvri en arsenic et sans perte d'indice d'octane.

Dans la suite, les groupes d'éléments chimiques sont donnés selon la classification CAS (CRC Handbook of Chemistry and Physics, éditeur CRC press, rédacteur en chef D.R. Lide, 81eme édition, 2000-2001). Par exemple, le groupe VIII selon la classification CAS correspond aux métaux des colonnes 8, 9 et 10 selon la nouvelle classification IUPAC.

Par "adsorbant catalytique" aussi appelé "adsorbant" dans la suite du texte, on entend au sens de la présente invention, un solide qui permet de capter par adsorption des impuretés telles que l'arsenic et qui permet simultanément d'éliminer les composés soufrés contenus dans la charge par une réaction catalytique en présence d'hydrogène.

### Description de l'invention

La présente invention concerne un adsorbant catalytique d'arsenic, ledit adsorbant comprenant au moins un métal M1 du groupe VIB et au moins deux métaux M2 et M3 du groupe VIII déposés sur un support poreux, dans lequel le rapport molaire des métaux (M2+M3)/M1 est compris entre 1 et 6, et dans lequel la teneur en métal M1 sous forme oxyde est comprise entre 4 et 10% poids par rapport au poids total de l'adsorbant, la teneur en métal M2 sous forme oxyde est compris entre 1 et 10% poids par rapport au poids total de l'adsorbant, et la teneur en métal M3 sous forme oxyde est compris entre 5 et 15% poids par rapport au poids total de l'adsorbant.

L'adsorbant catalytique selon l'invention présente avantageusement un rapport molaire des métaux M2/M3 compris entre 0,05 et 2.

Dans l'adsorbant catalytique selon l'invention, le métal M2 du groupe VIII est le cobalt et le métal M3 du groupe VIII est le nickel. Le métal M1 du groupe VIB est le molybdène.

L'adsorbant catalytique selon l'invention comprend avantageusement en outre du phosphore. Dans ce cas, la teneur en phosphore sous forme d'oxyde dans l'adsorbant catalytique selon l'invention est comprise entre 0,2 et 6 % poids par rapport au poids total dudit adsorbant.

La présente invention concerne également le procédé d'hydrodésulfuration d'une charge hydrocarbonée dans laquelle on met en contact la charge hydrocarbonée en présence d'hydrogène avec l'adsorbant catalytique selon l'invention.

Avantageusement, la mise en contact s'effectue à une température opératoire comprise entre 200 et 400°C, une pression opératoire comprise entre 0,2 et 5 MPa et un rapport du débit d'hydrogène sur le débit de charge hydrocarbonée compris entre 50 et 800 Nm³/m³.

Conformément au procédé d'hydrodésulfuration selon l'invention, la charge hydrocarbonée est préférentiellement une essence de craquage catalytique contenant entre 5% et 60 % poids de mono-oléfines, entre 50 et 6000 ppm poids de composés soufrés et entre 10 et 1000 ppb d'arsenic.

Avantageusement, l'adsorbant catalytique est soumis à un traitement de calcination préalablement à sa mise en oeuvre dans le procédé d'hydrodésulfuration de l'invention.

De préférence selon l'invention, l'adsorbant catalytique calciné est en outre soumis à un traitement de sulfuration avant sa mise en oeuvre dans le procédé d'hydrodésulfuration selon l'invention. Avantageusement, ladite sulfuration est réalisée de telle sorte que le taux de sulfuration des métaux constituants ledit adsorbant catalytique est d'au moins 60 %.

Le procédé d'hydrodésulfuration selon l'invention, comprend avantageusement en outre une ou plusieurs étapes complémentaires d'hydrodésulfuration dans la(s)quelle(s) on met en contact l'effluent issu de la mise en contact de la charge hydrocarbonée avec l'adsorbant catalytique d'arsenic avec au moins un autre catalyseur d'hydrodésulfuration.

Selon le procédé de l'invention, le rapport de volume dudit absorbant catalytique par rapport au volume dudit ou desdits autre(s) catalyseur(s) d'hydrodésulfuration est avantageusement compris entre 4 et 50%.

### Description détaillée de l'invention

La présente invention concerne un adsorbant catalytique, ledit adsorbant comprenant au moins un métal M1 du groupe VIB et au moins deux métaux M2 et M3 du groupe VIII déposés sur un support poreux, dans lequel le rapport molaire des métaux (M2+M3)/M1 est compris entre 1 et 6 et dans lequel la teneur en métal M1 du groupe VIB sous forme d'oxyde est comprise entre 3 et 14% poids par rapport au poids total dudit adsorbant, la teneur en métal M2 du groupe VIII sous forme d'oxyde est comprise entre 1 et 20 % poids par rapport au poids total de dudit adsorbant et la teneur en métal M3 du groupe VIII sous forme d'oxyde est comprise entre 5 et 28% poids par rapport au poids total dudit adsorbant.

L'adsorbant catalytique selon l'invention comprend au moins un métal M1 du groupe VIB et au moins deux métaux M2 et M3 du groupe VIII déposés sur un support poreux présente avantageusement un rapport molaire des métaux M2/M3 compris entre 0,05 et 2, de manière préférée entre 0,08 et 1,5, de manière encore plus préférée entre 0,08 et 1,25.

De manière préférée, le rapport molaire des métaux (M2+M3)/M1 de l'adsorbant catalytique selon l'invention est compris entre 1 et 5, de préférence entre 1 et 4,5, de manière plus préférée entre 1,5 et 4.

L'adsorbant catalytique selon l'invention présente de préférence une teneur en métal M1 du groupe VIB sous forme d'oxyde comprise entre 4 et 10% poids par rapport au poids total dudit adsorbant, et de manière plus préférée entre 4 et 9 % poids; de préférence une teneur en métal M2 du groupe VIII sous forme d'oxyde comprise entre 1 et 10% poids par rapport au poids total de dudit adsorbant, de manière plus préférée entre 1 et 9 % poids et de manière encore plus préférée entre 2 et 5% poids; de préférence une teneur en métal M3 du groupe VIII sous forme d'oxyde comprise entre 5 à 15 % poids par rapport au poids total dudit adsorbant, de manière préférée entre 7 à 15 % poids, de manière encore plus préférée entre 9 et 15 % poids.

De préférence selon l'invention, le métal M1 est le molybdène, le métal M2 est le cobalt et le métal M3 est le nickel.

L'adsorbant catalytique selon l'invention peut, en outre, comprendre un dopant tel que le phosphore. La teneur en phosphore sous forme d'oxyde est comprise entre 0,2 et 6 % poids par rapport au poids total dudit adsorbant, de manière préférée comprise entre 0,3 et 5 % poids et de manière plus préférée entre 0,4 et 4 % poids.

Les métaux dudit adsorbant catalytique sont déposés sur un support minéral amorphe sélectionné dans le groupe constitué par les alumines, la silice, les silices-alumines, le carbure de silicium, les oxydes de titane seuls ou en mélange avec l'alumine ou de la silice alumine, les oxydes de magnésium seuls ou en mélange avec l'alumine ou de la silice alumine. De préférence le support est sélectionné dans le groupe constitué par les alumines, la silice et les silices-alumines. De manière très préférée, le support est essentiellement constitué par au moins une alumine, c'est-à-dire qu'il comprend au moins 51 % poids, de préférence au moins 60 % poids, de manière très préféré au moins 80 % poids, voire au moins 90% poids. L'alumine peut être de différentes formes cristallines comme par exemple, de l'alumine alpha, de l'alumine beta, de l'alumine gamma, de l'alumine delta, de l'alumine êta, de l'alumine thêta, de la boehmite ou leurs mélanges. La surface spécifique du support est comprise entre 70 et 350 m²/g, de préférence entre 100 et 300 m²/g, de manière très préférée entre 130 et 250 m²/g. La surface spécifique est mesurée par la technique BET (norme ASTM D3663) bien connue de l'homme du métier. La porosité du support est telle que celui-ci possède un volume poreux compris entre 0,4 et 1,4 cm³/g, de préférence compris entre 0,5 et 1,3 cm³/g. Le volume poreux a été mesuré par porosimétrie au mercure selon la norme ASTM D4284-92 avec un angle de mouillage de 140°.

Les métaux sont déposés sur le support de l'adsorbant catalytique selon l'invention selon des techniques bien connues de l'homme du métier, par exemple par imprégnation à partir de solution de précurseurs de métaux. L'imprégnation peut être par exemple réalisée selon le mode connu d'imprégnation à sec dans lequel on introduit la quantité d'éléments désirée sous forme de sels solubles dans le solvant choisi, par exemple de l'eau déminéralisée, de façon à remplir aussi exactement que possible la porosité du support. Le support ainsi rempli par la solution est de préférence séché. Le support préféré est l'alumine qui peut être préparée à partir de tout type de précurseurs et outils de mise en forme connus de l'homme du métier.

Les métaux peuvent être déposés en co-imprégnation ou par ajout successif. De façon préférée M1 et M2 d'abord puis M3 ou M3 d'abord puis M1+M2. Du phosphore peut être ajouté dans les solutions d'imprégnation. Pour le cobalt, on utilise avantageusement comme précurseur le nitrate de cobalt, l'hydroxyde de cobalt ou le carbonate de cobalt. Pour le nickel, on utilise avantageusement comme précurseur le nitrate de nickel, l'hydroxyde de nickel ou le carbonate de nickel. Pour le molybdène, on utilise; avantageusement comme précurseur l'heptamolybdate d'ammonium ou l'oxyde de molybdène. Lorsque le phosphore est présent dans la phase active de l'adsorbant catalytique selon l'invention, on utilise avantageusement comme précurseur l'acide phosphorique. Tout autre sel connu de l'homme du métier présentant une solubilité suffisante en solution aqueuse et décomposable lors d'une étape de séchage ou tout type de traitement oxydant peut également être utilisé.

Après introduction des métaux des groupes VIII et VIB et éventuellement du phosphore, l'adsorbant catalytique selon l'invention est préférentiellement soumis à un traitement de calcination. Ce traitement a pour but de transformer les précurseurs moléculaires des métaux en phase oxyde. Il s'agit dans ce cas d'un traitement oxydant mais un simple séchage de l'adsorbant catalytique peut également être effectué. De manière préférée, l'adsorbant catalytique est soumis à un traitement de calcination, préalablement à sa mise en oeuvre dans le procédé d'hydrodésulfuration selon l'invention. Ledit traitement de calcination est avantageusement mis en oeuvre sous air ou sous oxygène dilué, à une température comprise entre 200°C et 550°C, de préférence entre 300°C et 500°C.

Après calcination, les métaux déposés sur le support se trouvent sous forme d'oxyde. Avantageusement, l'adsorbant catalytique calciné est en outre soumis à un traitement de sulfuration avant sa mise en oeuvre dans le procédé d'hydrodésulfuration selon l'invention. La sulfuration est réalisée en milieu sulforéducteur, c'est à dire en présence d'H₂S et d'hydrogène, afin de transformer les oxydes métalliques en sulfures de métaux de transition tels que le MoS₂, le Ni₃S₂ et le Co₉S₈. La sulfuration est réalisée en injectant sur l'adsorbant catalytique un flux contenant de l'H₂S et de l'hydrogène, ou bien un composé soufré susceptible de se décomposer en H₂S en présence de l'adsorbant catalytique et de l'hydrogène. Les polysulfures tel que le diméthyldisulfure sont des précurseurs d'H₂S couramment utilisés pour sulfurer les catalyseurs. La température est ajustée afin que l'H₂S réagisse avec les oxydes métalliques pour former des sulfures métalliques. Cette sulfuration peut être réalisée in situ ou ex situ (en dedans ou dehors du réacteur d'hydrodésulfuration) à des températures comprises entre 200 et 600°C et plus préférentiellement entre 300 et 500°C. Pour être actifs, les métaux doivent être substantiellement sulfurés. Un élément est considéré comme substantiellement sulfuré lorsque le rapport molaire entre le soufre (S) présent sur l'adsorbant catalytique et le dit élément est au moins égal à 60% du rapport molaire théorique correspondant à la sulfuration totale de l'élément considéré :
(S/élément)_{adsorbant catalytique} >= 0,6 x (S/élement)_{théorique} avec :
(S/élément)_{adsorbant catalytique} rapport molaire entre le soufre (S) et l'élément présent sur l'adsorbant catalytique.
(S/élément)_{théorique} rapport molaire entre le soufre et l'élément correspondant à la sulfuration totale de l'élément en sulfure. Ce rapport molaire théorique varie selon l'élément considéré :
   - (S/Co)_{théorique} = 8/9
   - (S/Ni)_{théorique} = 2/3
   - (S/Mo)_{théorique} =2/1

L'adsorbant catalytique comprenant plusieurs métaux, le rapport molaire entre le S présent sur l'adsorbant et l'ensemble des éléments doit également être au moins égal à 60% du rapport molaire théorique correspondant à la sulfuration totale de chaque élément en sulfure, le calcul étant effectué au prorata des fractions molaires relatives de chaque élément.

De façon préférée selon l'invention, l'adsorbant catalytique calciné est en outre soumis à un traitement de sulfuration avant sa mise en oeuvre dans le procédé d'hydrodésulfuration selon l'invention de telle sorte le taux de sulfuration des métaux constituant le dit absorbant catalytique est d'au moins de 60%, de manière plus préférée d'au moins de 80%.

Après sulfuration, l'adsorbant catalytique selon l'invention est prêt pour être utilisé dans un procédé d'adsorption d'arsenic et de d'hydrodésulfuration d'une charge hydrocarbonée comprenant composés insaturés.

### Procédé d'hydrodésulfuration mettant en oeuvre l'adsorbant catalytique

Un autre objet de l'invention est un procédé d'hydrodésulfuration d'une charge hydrocarbonée dans laquelle on met en contact la charge hydrocarbonée en présence d'hydrogène avec l'adsorbant catalytique selon l'invention. Dans le sens de la présente invention, le procédé d'hydrodésulfuration mettant en oeuvre l'adsorbant catalytique selon l'invention est un procédé d'adsorption d'arsenic et de désulfuration d'une charge hydrocarbonée en présence d'hydrogène pour produire un effluent à teneur en soufre réduite et appauvri en arsenic, avec une perte limitée de l'indice d'octane.

La charge hydrocarbonée à traiter est une essence de craquage catalytique issue d'unités de craquage catalytique, de craquage thermique ou de vapocraquage. Le procédé peut également s'appliquer au traitement de mélanges d'essences de distillation directe qui peuvent contenir des métaux lourds issus du brut avec des essences de craquage comprenant des mono-oléfines et des dioléfines. De manière préférée, la charge hydrocarbonée à traiter est une essence de craquage catalytique comprenant entre 5 % et 60 % poids de mono-oléfines, entre 50 ppm et 6000 ppm de composés soufrés et entre 10 et 1000 ppb d'arsenic.

Les composés soufrés contenus dans la charge hydrocarbonée à traiter peuvent être des composés soufrés organiques tels que par exemple, les mercaptans, les composés thiols, les composés thiophéniques, les benzothiophènes et autres composés soufrés aromatiques, les composés disulfites, etc.

Les composés arséniés contenus dans la charge hydrocarbonée à traiter peuvent être des composés arséniés organiques tels que par exemple la triméthylarsine ou la triéthylarsine.

Les mono-oléfines désignent des molécules hydrocarbonées présentant une unique double liaison carbone-carbone et les dioléfines sont des molécules hydrocarbonées comprenant au moins deux doubles liaisons carbone-carbone. Les mono-oléfines et les dioléfines peuvent être des molécules hydrocarbonées linéaires, ramifiées et/ou cycliques.

Pour être actif en adsorption des composés arséniés, l'adsorbant catalytique selon l'invention doit être mis en oeuvre avantageusement dans des conditions opératoires telles que la vitesse d'adsorption de l'arsenic soit maximisée, tout en limitant la vitesse d'hydrogénation des oléfines. Ainsi, dans le procédé d'hydrodésulfuration selon l'invention, la mise en contact de la charge hydrocarbonée avec l'adsorbant catalytique selon l'invention s'effectue préférentiellement à une température opératoire comprise entre 200 et 400 °C, une pression opératoire comprise entre 0,2 et 5 MPa, un rapport du débit d'hydrogène sur le débit de charge hydrocarbonée compris entre 50 et 800 Nm³/m³. De manière plus préférée, la température opératoire est comprise entre 240 et 350 °C, la pression opératoire comprise entre 0,5 et 3 MPa, et le rapport du débit d'hydrogène sur le débit de la charge hydrocarbonée est compris entre 100 et 600 Nm³/m³.

L'hydrogène utilisé peut être issu de toute source d'hydrogène. De préférence on utilise de l'hydrogène frais issu de la raffinerie et/ou de l'hydrogène recyclé d'une unité d'hydrodésulfuration, de préférence de l'unité d'hydrodésulfuration de la coupe hydrocarbonée à purifier.

Le procédé d'hydrodésulfuration selon l'invention permet d'éliminer l'arsenic et de transformer simultanément une partie des composés soufrés organiques en H₂S. Il permet également de limiter le taux d'hydrogénation des mono-oléfines et dioléfines. Le taux d'hydrogénation des oléfines est avantageusement inférieur à 50 %, préférentiellement inférieur à 30 %, et de manière encore préférée inférieur à 20 %.

Plusieurs technologies de réacteur sont envisageables pour réaliser l'adsorption et l'hydrodésulfuration d'une charge hydrocarbonée en présence de l'adsorbant catalytique selon l'invention. La technologie la plus classique et la plus répandue étant la technologie en lit fixe. Dans ce cas, un réacteur est chargé avec l'adsorbant catalytique selon l'invention, fonctionnant en adsorption de l'arsenic et en hydrodésulfuration, en principe jusqu'à l'apparition d'arsenic dans l'effluent de sortie, (phénomène connu de l'homme du métier sous le vocable de perçage). Dans certains cas la quantité totale de l'adsorbant empoisonné peut être remplacée par une quantité équivalente d'adsorbant frais. Le choix d'une technologie de remplacement de l'adsorbant catalytique selon l'invention n'est pas considéré dans le cadre de la présente invention comme un élément limitatif. L'adsorbant catalytique peut être mis en oeuvre dans un réacteur à lit mobile, c'est à dire que l'adsorbant usé est soutiré en continu, et remplacé par de l'adsorbant catalytique frais. Ce type de technologie permet de maintenir la captation de l'arsenic par l'adsorbant catalytique et d'éviter le perçage de ce dernier dans les effluents produits. Parmi d'autres solutions, citons la mise en oeuvre des réacteurs en lit expansé qui permet également un soutirage et un appoint continu d'adsorbant catalytique afin de maintenir l'activité d'hydrodésulfuration de l'adsorbant catalytique.

Dans une autre variante de l'invention, le procédé d'hydrodésulfuration selon l'invention, à savoir le procédé d'adsorption d'arsenic et de désulfuration d'une charge hydrocarbonée en présence d'hydrogène peut comprendre une ou plusieurs autres étapes complémentaires d'hydrodésulfuration dans la(s)quelle(s) on met en contact l'effluent issu de la mise en contact de la charge hydrocarbonée avec l'adsorbant catalytique selon l'invention, avec au moins un autre catalyseur d'hydrodésulfuration. La(es)dite(es) étapes complémentaires d'hydrodésulfuration permet (tent) d'éliminer les composés soufrés résiduels contenus dans l'effluent appauvri en arsenic et à plus basse teneur en soufre. Certains de ces composés soufrés résiduels peuvent être issus de l'addition de H₂S sur les oléfines présentes dans la charge. L'H₂S peut se former au cours de la mise en contact de la charge hydrocarbonée avec l'adsorbant catalytique, c'est-à-dire, pendant l'adsorption de l'arsenic et la désulfuration mettant en oeuvre l'adsorbant catalytique selon l'invention. La teneur en composés soufrés résiduels dépend de la concentration en soufre de la charge oléfinique.

La(es)dite(es) étapes complémentaires d'hydrodésulfuration est (sont) mise(s) en oeuvre lorsque l'effluent issu de la mise en contact de la charge hydrocarbonée avec l'adsorbant catalytique présente une teneur en soufre supérieure à 10 ppm et qu'il est nécessaire de produire des essences à faible teneur en soufre répondant aux spécifications actuelles. L'effluent débarrassé de l'arsenic et d'une partie des composés soufrés est alors traité dans au moins une desdites étapes complémentaires d'hydrodésulfuration sélective. Dans la(es)dite(es) étapes, ledit effluent est mis en contact avec au moins un autre catalyseur d'hydrodésulfuration dans des conditions opératoires qui peuvent être identiques ou différentes de celles de la mise en contact de la charge hydrocarbonée avec l'adsorbant catalytique.

Le(les) catalyseur(s) mis en oeuvre dans la(es)dite(es) étapes complémentaires d'hydrodésulfuration est (sont) protégé(s) de l'arsenic présent dans la charge par l'adsorbant catalytique selon l'invention mis en oeuvre. Ainsi des catalyseurs d'hydrodésulfuration très sélectifs qui sont sensibles à la présence d'arsenic peuvent être mis en oeuvre dans la(es)dite(es) étape(s) complémentaires d'hydrodésulfuration. Tout catalyseur d'hydrodésulfuration peut être utilisé dans la(es)dite(es) étape(s) complémentaire(s) d'hydrodésulfuration. De préférence, on utilise des catalyseurs présentant une bonne sélectivité vis-à-vis des réactions d'hydrodésulfuration. De tels catalyseurs comprennent au moins un support minéral amorphe et poreux, un métal du groupe VIB, un métal du groupe VIII. Le métal du groupe VIB est préférentiellement le molybdène ou le tungstène et le métal du groupe VIII est préférentiellement le nickel ou le cobalt. Le support est généralement sélectionné dans le groupe constitué par les alumines, la silice, les silice-alumines, le carbure de silicium, les oxydes de titane seuls ou en mélange avec de l'alumine ou de la silice alumine, les oxydes de magnésium seuls ou en mélange avec de l'alumine ou de la silice alumine. De préférence, le support est sélectionné dans le groupe constitué par les alumines, la silice et les silice-alumines. Un exemple de catalyseur d'hydrodésulfuration utilisé dans la(es)dite(es) étape(s) complémentaire(s) d'hydrodésulfuration est décrit dans la demande EP1892039.

Dans la(es)dite(es) étape(s) complémentaire(s) d'hydrodésulfuration, l'effluent à plus basse teneur en soufre et appauvri en arsenic issu la mise en contact de la charge hydrocarbonée avec l'adsorbant catalytique selon l'invention peut être mis en contact avec au moins un autre catalyseur d'hydrodésulfuration sélective avantageusement dans les conditions opératoire suivantes : température comprise entre environ 210 et environ 410°C, préférentiellement entre 240 et 360°C, une pression totale comprise entre 0,2 et 5 MPa et plus préférentiellement entre 0,5 et environ 3 MPa avec un ratio volume d'hydrogène par volume de charge hydrocarbonée, compris entre 50 et 800 Nm³/m³ et plus préférentiellement entre 60 et 600 Nm³/m³.

Dans une variante du procédé selon l'invention, les conditions opératoires de la mise en contact de la charge hydrocarbonée avec l'adsorbant catalytique selon l'invention sont identiques à celles mises en oeuvre dans la(es)dite(es) étape(s) complémentaire(s) d'hydrodésulfuration.

Dans une variante du procédé selon l'invention, l'adsorbant catalytique selon l'invention peut être placé en position de lit de garde d'un ou plusieurs réacteur(s) contenant le(s) catalyseur(s) mis en œuvre dans la(es)dite(es) étape(s) complémentaire(s) d'hydrodésulfuration.

Dans une autre variante du procédé selon l'invention, l'adsorbant catalytique selon l'invention est placé dans un réacteur dit d'adsorption. Ce réacteur est séparé et est placé en amont du (des) réacteur(s) contenant le(s) catalyseur(s) mis en oeuvre dans la(es)dite(es) étape(s) complémentaire(s) d'hydrodésulfuration.

Dans toutes les variantes du procédé selon l'invention, mettant en oeuvre au moins une étape complémentaire d'hydrodésulfuration, le rapport de volume de l'adsorbant catalytique selon l'invention par rapport au volume de (des) catalyseur(s) mis en oeuvre dans la(es)dite(es) étape(s) complémentaire(s) d'hydrodésulfuration est avantageusement compris entre 4 et 50%, de préférence entre 5 et 40%, de manière plus préférée entre 5 et 35%.

### Exemples

Les exemples qui suivent illustrent l'invention sans pour autant en limiter la portée.

### Exemple 1 : Préparation des solides adsorbants

Dans les exemples qui suivent, la surface spécifique du support est mesurée par la méthode BET (norme ASTM D3663). Le volume poreux est mesuré par porosimétrie au mercure selon la norme ASTM D4284-92 avec un angle de mouillage de 140°.

Les supports utilisés sont des alumines de transition présentant une surface spécifique de 135 m²/g et un volume poreux de 1,12 cm³/g.

L'adsorbant catalytique A (solide A, non conforme) est préparé par une double imprégnation à sec d'une solution aqueuse préparée à partir de nitrate de nickel, le volume de la solution contenant le métal étant égal au volume poreux de la masse de support. Le solide est ensuite séché pendant 12 heures à 120°C puis calciné sous air à 500°C pendant 2 heures.

L'adsorbant catalytique (solide B, non conforme) contient uniquement du nickel et du molybdène. Il est préparé à partir du solide A par imprégnation à sec d'une solution aqueuse préparée à partir d'heptamolybdate d'ammonium, le volume de la solution contenant le métal étant rigoureusement égal au volume poreux de la masse de support. La concentration en précurseur de la solution aqueuse est ajustée de manière à déposer sur le support la teneur pondérale souhaitée. Le solide est ensuite séché pendant 12 heures à 120°C puis calciné sous air à 500°C pendant 2 heures.

L'adsorbant catalytique C (solide C, non conforme) comprend trois métaux : du nickel, du cobalt et du molybdène. Le rapport Co+Ni/Mo est conforme à l'invention, mais la teneur en nickel est non conforme à l'invention. Le solide C est préparé en deux étapes. La première étape consiste en l'imprégnation à sec d'une solution aqueuse d'heptamolybdate d'ammonium et de nitrate de cobalt, le volume de la solution contenant les métaux étant rigoureusement égal au volume poreux de la masse de support. Les concentrations en précurseurs de la solution aqueuse sont ajustées de manière à déposer sur le support les teneurs pondérales souhaitées. Le solide est ensuite séché pendant 12 heures à 120°C puis calciné sous air à 500°C pendant 2 heures. La deuxième étape permet l'imprégnation à sec d'une solution aqueuse de nitrate de nickel, le volume de la solution contenant le métal étant rigoureusement égal au volume poreux de la masse de support. La concentration en précurseur de la solution aqueuse est ajustée de manière à déposer sur le support la teneur pondérale souhaitée. Le solide est ensuite séché pendant 12 heures à 120°C puis calciné sous air à 500°C pendant 2 heures.

L'adsorbant catalytique D (solide D, non conforme) contient du nickel, du cobalt et du molybdène, mais avec des teneurs en cobalt et molybdène non conformes à l'invention. Il est préparé à partir du solide A par imprégnation à sec d'une solution aqueuse préparée à partir d'heptamolybdate d'ammonium et de nitrate de cobalt, le volume de la solution contenant les métaux étant rigoureusement égal au volume poreux de la masse de support. Les concentrations en précurseurs de la solution aqueuse sont ajustées de manière à déposer sur le support les teneurs pondérales souhaitées. Le solide est ensuite séché pendant 12 heures à 120°C puis calciné sous air à 500°C pendant 2 heures.

L'adsorbant catalytique E (solide E, non conforme) contient du nickel, du cobalt et du molybdène, mais avec une teneur en molybdène non conforme à l'invention. Il est préparé en deux étapes. La première étape consiste en l'imprégnation à sec d'une solution aqueuse de nitrate de nickel, le volume de la solution contenant le métal étant rigoureusement égal au volume poreux de la masse de support. La concentration en précurseur de la solution aqueuse est ajustée de manière à déposer sur le support la teneur pondérale souhaitée. Le solide est ensuite séché pendant 12 heures à 120°C puis calciné sous air à 500°C pendant 2 heures. La deuxième étape permet l'imprégnation à sec d'une solution aqueuse d'heptamolybdate d'ammonium et de nitrate de cobalt, le volume de la solution contenant les métaux étant rigoureusement égal au volume poreux de la masse de support. Les concentrations en précurseurs de la solution aqueuse sont ajustées de manière à déposer sur le support les teneurs pondérales souhaitées. Le solide est ensuite séché pendant 12 heures à 120°C puis calciné sous air à 500°C pendant 2 heures.

L'adsorbant catalytique (solide F, selon l'invention) contient à la fois du nickel du molybdène et du cobalt. Il est préparé à partir du solide A par imprégnation à sec d'une solution aqueuse préparée à partir d'oxyde de molybdène, d'hydroxyde de cobalt et d'acide phosphorique, le volume de la solution contenant les métaux étant rigoureusement égal au volume poreux de la masse de support. Les concentrations en précurseurs de la solution aqueuse sont ajustées de manière à déposer sur le support les teneurs pondérales souhaitées. Le solide est ensuite séché pendant 12 heures à 120°C puis calciné sous air à 500°C pendant 2 heures.

L'adsorbant catalytique G (solide G, selon l'invention) contient à la fois du nickel, du cobalt et du molybdène, est préparée en deux étapes. La première étape consiste en l'imprégnation à sec d'une solution aqueuse d'heptamolybdate d'ammonium et de nitrate de cobalt, le volume de la solution contenant les métaux étant rigoureusement égal au volume poreux de la masse de support. Les concentrations en précurseurs de la solution aqueuse sont ajustées de manière à déposer sur le support les teneurs pondérales souhaitées. Le solide est ensuite séché pendant 12 heures à 120°C puis calciné sous air à 500°C pendant 2 heures. La deuxième étape permet l'imprégnation à sec d'une solution aqueuse de nitrate de nickel, le volume de la solution contenant le métal étant rigoureusement égal au volume poreux de la masse de support. La concentration en précurseur de la solution aqueuse est ajustée de manière à déposer sur le support les teneurs pondérales souhaitées. Le solide est ensuite séché pendant 12 heures à 120°C puis calciné sous air à 500°C pendant 2 heures.

L'adsorbant catalytique (solide H) selon l'invention contenant à la fois du nickel, du cobalt et du molybdène est préparé en deux étapes. La première étape permet l'imprégnation à sec d'une solution aqueuse de nitrate de nickel, le volume de la solution contenant le métal étant rigoureusement égal au volume poreux de la masse de support. La concentration en précurseur de la solution aqueuse est ajustée de manière à déposer sur le support la teneur pondérale souhaitée. Le solide est ensuite séché pendant 12 heures à 120°C, puis calciné sous air à 500°C pendant 2 heures. La deuxième étape consiste en l'imprégnation à sec d'une solution aqueuse d'heptamolybdate d'ammonium et de nitrate de cobalt, le volume de la solution contenant les métaux étant rigoureusement égal au volume poreux de la masse de support. Les concentrations en précurseurs de la solution aqueuse sont ajustées de manière à déposer sur le support les teneurs pondérales souhaitées. Le solide est ensuite séché pendant 12 heures à 120°C, puis calciné sous air à 500°C pendant 2 heures.

Les teneurs en oxydes métalliques de ces adsorbants catalytiques sont décrites dans le tableau 1.

**Tableau 1: Description des solides**

| | %NiO | % MoO₃ | %CoO | %P2O5 | (Co+Ni)/Mo |
|---|---|---|---|---|---|
| Solide A (non conforme) | 10 | - | - | - | - |
| Solide B (non conforme) | 10 | 1,8 | - | - | - |
| Solide C (non conforme) | 3 | 8,9 | 2,4 | - | 1,2 |
| Solide D (non conforme) | 10 | 1,8 | 0,5 | - | 11,2 |
| Solide E (non conforme) | 9 | 1,8 | 3 | - | 12,8 |
| Solide F (selon l'invention) | 10 | 4,1 | 2,1 | 0,5 | 5,7 |
| Solide G (selon l'invention) | 10 | 8,9 | 2,4 | - | 2,7 |
| Solide H (selon l'invention) | 9 | 4,1 | 3 | - | 5,6 |

### Exemple 2 : Test d'adsorption de l'arsenic

Les solides à tester (dont la composition est définie dans le tableau 1) sont chargés en lits fixes successifs à l'intérieur d'un réacteur tubulaire. On étudie la saturation du solide placé en lit d'attaque (c'est-à-dire sur le premier lit des lits fixes successifs dans le sens d'écoulement de la charge). La composition d'une essence de craquage catalytique (FCC) contenant de l'arsenic est décrite dans le tableau 2. Cette essence est injectée de façon à percoler à travers les différents lits chargés dans le réacteur.

**Tableau 2 : Caractéristiques de la coupe essence de FCC.**

| | |
|---|---|
| As | 15 |
| ppm (partie par millions) | |
| S | 200 |
| (ppm) | |
| Aromatiques (% poids) | 18,27 |
| Paraffines et Naphténiques (% poids) | 50,76 |
| Oléfines (% poids) | 30,95 |
| PI °C | 54 |
| PF°C | 168 |

Les conditions opératoires du test d'adsorption de l'arsenic sur les solides à tester sont les suivantes :
Pression : 2,0 MPa,
Ratio H2/charge : 300 N l/l de charge hydrocarbonée,
Vitesse Volumique Horaire : 4 h⁻¹,
Température : 260°C

Les solides à tester sont chargés dans le réacteur à l'état présulfuré (présulfuration ex-situ en phase gaz à 450°C pendant 2 heures sous flux d'H2S dans H2 (15%vol)). Les solides sont ensuite activés dans le réacteur par un flux d'hydrogène à 250°C avec un débit de 1,2 N I d'hydrogène/gr d'adsorbant catalytique. Le taux de sulfuration des solides est de 90 %.

Le suivi de l'adsorption d'arsenic se fait par mesure dans les effluents liquides de la teneur en arsenic. L'analyse de l'arsenic est réalisée par spectrométrie d'absorption atomique (four graphite). Le test est terminé lorsque l'arsenic a percé, c'est-à-dire lorsque l'arsenic a été détecté analytiquement dans les effluents.

Les solides sont alors déchargés et la masse d'arsenic adsorbée par le solide est déterminée par fluorescence X. La quantité d'arsenic adsorbée en pourcentage massique pour chaque solide testé est présentée dans le tableau 3.

**Tableau 3 : Caractéristiques des solides testés et quantité d'arsenic adsorbée sur ces solides.**

| | % NiO | % MaO₃ | %CoO | %P2O5 | (Co+Ni)/Mo | %pds As |
|---|---|---|---|---|---|---|
| Solide A (non conforme) | 10 | - | - | - | - | 7 |
| Solide B (non conforme) | 10 | 1,8 | - | - | - | 7,5 |
| Solide C (non conforme) | 3 | 8,9 | 2,4 | - | 1,2 | 4,2 |
| Solide D (non conforme) | 10 | 1,8 | 0,5 | - | 11,2 | 7,7 |
| Solide E (non conforme) | 9 | 1,8 | 3 | - | 12,8 | 9,6 |
| Solide F (selon l'invention) | 10 | 4,1 | 2,1 | 0,5 | 5,7 | 10,1 |
| Solide G (selon l'invention) | 10 | 8,9 | 2,4 | - | 2,7 | 10,5 |
| Solide H (selon l'invention) | 9 | 4,1 | 3 | - | 5,6 | 10,7 |

### Exemple 4 : Test d'activité et sélectivité

Les performances catalytiques des différents solides ont été évaluées avant adsorption d'arsenic et après le test d'adsorption afin de rendre compte de leur stabilité.

Afin d'évaluer les performances catalytiques en hydrodésulfuration (HDS) et en sélectivité HDS/HYD (hydrodésulfuration/hydrogénation des oléfines), une charge modèle représentative d'une essence de craquage catalytique (FCC) contenant 10 % poids de 2,3-diméthylbut-2-ène, 0,33 % poids de 3-méthylthiophène (soit 1000 ppm de soufre par rapport à la charge) et qsp 100% d'heptane (qsp: quantité suffisante pour) est utilisée. Les solides à tester sont préalablement sulfurés ex-situ en phase gaz à 450°C pendant 2h sous flux d'H2S dans H2 (15%).

La réaction est réalisée en réacteur fermé de type Grignard sous 3,5 MPa de pression d'hydrogène et à une température de 250°C. Les solides sont introduits en lit fixe dans le réacteur et la charge modèle percole à travers le lit fixe. Des échantillons d'effluents sont prélevés à différents intervalles de temps et sont analysés par chromatographie en phase gazeuse de façon à observer la disparition des réactifs et l'apparition des produits en conséquence.

L'activité d'hydrodésulfuration est exprimée en constante de vitesse kHDS de la réaction d'hydrodésulfuration (HDS), normalisée par volume de solide sous forme oxyde, en supposant un ordre 1 par rapport aux composés soufrés. La sélectivité de la réaction d'hydrodésulfuration est exprimée en rapport normalisé des constantes de vitesse kHDS/kHYD, kHYD étant la constante de vitesse pour la réaction d'hydrogénation des oléfines (HYD), normalisée par volume de solide sous forme oxyde, en supposant un ordre 1 par rapport aux oléfines.

Les valeurs d'activité et de sélectivité sont normalisées en prenant le solide B comme référence et en prenant kHDS/kHYD=100 et kHDS=100.

| Solide | % pds NiO | %pds MoO₃ | % pds CoO | k_{HDS}/ k_{HYD} | k_{HDS} |
|---|---|---|---|---|---|
| B (référence) | 10 | 1,8 | - | 100 | 100 |

Les performances catalytiques de ces solides en termes d'activité HDS et de sélectivité HDS/HYD normalisées par rapport au solide B de référence frais sont présentées dans le tableau 4 en termes d'activité initiale et dans le tableau 5 en termes d'activité après adsorption de l'arsenic, la sélectivité après adsorption étant restée sensiblement constante pour tous les solides testés.

**Tableau 4 : Performances initiales des solides à tester sur charge hydrocarbonée modèle.**

| | % NiO | % MoO₃ | % CoO | % P₂O₅ | (Co+Ni)/Mo | Activité initiale en HDS normalisée | Sélectivité normalisée |
|---|---|---|---|---|---|---|---|
| Solide A (non conforme) | 10 | - | - | - | - | 37 | 240 |
| Solide B (non conforme) | 10 | 1,8 | - | - | - | 100 | 100 |
| Solide C (non conforme) | 3 | 8,9 | 2,4 | - | 1,2 | 220 | 66 |
| Solide D (non conforme) | 10 | 1,8 | 0,5 | - | 11,2 | 120 | 110 |
| Solide E (non conforme) | 9 | 1,8 | 3 | - | 12,8 | 125 | 105 |
| Solide F (selon l'invention) | 10 | 4,1 | 2,1 | 0,5 | 5,7 | 170 | 129 |
| Solide G (selon l'invention) | 10 | 8,9 | 2,4 | - | 2,7 | 192 | 112 |
| Solide H (selon l'invention) | 9 | 4,1 | 3 | - | 5,6 | 165 | 134 |

**Tableau 5 : Performances des solides à tester après d'adsorption de l'arsenic sur charge modèle en référence au solide B frais du tableau 4.**

| | % NiO | %MoO₃ | %CoO | % P₂O₅ | (Co+Ni)/Mo | Activité en HDS normalisée après adsorption de l'arsenic |
|---|---|---|---|---|---|---|
| Solide A (non conforme) | 10 | - | - | - | - | 16 |
| Solide B (non conforme) | 10 | 1,8 | - | - | - | 17 |
| Solide C (non conforme) | 3 | 8,9 | 2,4 | - | 1,2 | 65 |
| Solide D (non conforme) | 10 | 1,8 | 0,5 | - | 11,2 | 18 |
| Solide E (non conforme) | 9 | 1,8 | 3 | - | 12,8 | 17 |
| Solide F (selon l'invention) | 10 | 4,1 | 2,1 | 0,5 | 5,7 | 71 |
| Solide G (selon l'invention) | 10 | 8,9 | 2,4 | - | 2,7 | 98 |
| Solide H (selon l'invention) | 9 | 4,1 | 3 | - | 5,6 | 73 |

Le solide A est non conforme. Il permet l'adsorption de l'arsenic, a une très bonne sélectivité de la réaction d'hydrodésulfuration mais a une activité d'hydrodésulfuration relativement faible. De plus son activité d'hydrodésulfuration n'est pas stable dans le temps. Cette dernière devient très faible après que l'arsenic a été adsorbé.

Le solide B est non conforme. Il permet une bonne adsorption de l'arsenic, a de bonnes performances catalytiques d'hydrodésulfuration et de sélectivité. Mais ses performances catalytiques d"hydrodésulfuration ne sont pas stables dans le temps. Elles diminuent fortement, après que l'arsenic a été adsorbé, celle-ci est très voisine du solide A.

Le solide C est non conforme. Sa teneur en nickel n'est pas adaptée à une adsorption maximale de l'arsenic, malgré une activité HDS initiale meilleure que celle du solide B et plus stable dans le temps. De plus, ce solide ne présente pas de bonnes propriétés de sélectivité.

Le solide D est non conforme; ses teneurs en cobalt et molybdène ne sont pas adaptées pour garantir une activité HDS stable dans le temps.

Le solide E est non conforme; sa teneur en molybdène n'est pas adaptée pour garantir une activité HDS stable dans le temps.

Les solides F, G et H selon l'invention permettent à la fois une bonne adsorption de l'arsenic, de plus, ces solides ont des performances catalytiques optimisées. L'activité d'hydrodésulfuration initiale est bien supérieure au solide de référence B, ils présentent une bonne sélectivité et l'activité d'hydrodésulfuration après adsorption de l'arsenic n'est pas fortement abaissée. L'activité d'hydrodésulfuration de ces solides est stable dans le temps.

## Revendications

1. Adsorbant catalytique d'arsenic, ledit adsorbant comprenant au moins un métal M1 du groupe VIB et au moins deux métaux M2 et M3 du groupe VIII déposés sur un support poreux, dans lequel le métal M1 du groupe VIB est le molybdène, le métal M2 est le cobalt et le métal M3 est le nickel, dans lequel le rapport molaire des métaux (M2+M3)/M1 est compris entre 1 et 6, et dans lequel la teneur en métal M1 sous forme oxyde est comprise entre 4 et 10% poids par rapport au poids total de l'adsorbant, la teneur en métal M2 sous forme oxyde est compris entre 1 et 10% poids par rapport au poids total de l'adsorbant, et la teneur en métal M3 sous forme oxyde est compris entre 5 et 15% poids par rapport au poids total de l'adsorbant.

2. Adsorbant selon la revendication précédente, dans lequel le rapport molaire des métaux M2/M3 est compris entre 0,05 et 2.

3. Adsorbant selon l'une quelconque des revendications précédentes, comprenant en outre du phosphore.

4. Adsorbant selon la revendication précédente, dans lequel la teneur en phosphore sous forme d'oxyde est comprise entre 0,2 et 6 % poids par rapport au poids total dudit adsorbant.

5. Procédé d'hydrodésulfuration d'une charge hydrocarbonée dans laquelle on met en contact la charge hydrocarbonée en présence d'hydrogène avec l'adsorbant catalytique d'arsenic selon l'une des revendications précédentes.

6. Procédé selon la revendication précédente, dans lequel l'adsorbant catalytique est soumis à un traitement de calcination préalablement à sa mise en oeuvre dans le procédé d'hydrodésulfuration.

7. Procédé selon la revendication précédente, dans lequel l'adsorbant catalytique calciné est en outre soumis à un traitement de sulfuration avant sa mise en œuvre dans le procédé d'hydrodésulfuration.

8. Procédé selon la revendication précédente, dans lequel la sulfuration du métal considéré est réalisée de telle sorte que le rapport molaire entre le soufre S présent sur l'adsorbant catalytique et le métal considéré est au moins égal à 60% du rapport molaire théorique correspondant à la sulfuration totale dudit métal considéré.

9. Procédé selon l'une des revendications 5 à 8, dans lequel la mise en contact s'effectue à une température opératoire comprise entre 200 et 400°C, une pression opératoire comprise entre 0,2 et 5 MPa et un rapport du débit d'hydrogène sur le débit de charge hydrocarbonée compris entre 50 et 800 Nm³/m³.

10. Procédé selon l'une des revendications 5 à 9, comprenant en outre une ou plusieurs étapes complémentaires d'hydrodésulfuration dans la(s)quelle(s) on met en contact l'effluent issu de la mise en contact de la charge hydrocarbonée avec l'adsorbant catalytique avec au moins un autre catalyseur d'hydrodésulfuration.

11. Procédé selon la revendication précédente, tel que le rapport de volume dudit absorbant catalytique par rapport au volume dudit ou desdits autre(s) catalyseur(s) d'hydrodésulfuration est compris entre 4 et 50%.

12. Procédé selon l'une quelconque des revendications 5 à 11, dans lequel la charge hydrocarbonée est une essence de craquage catalytique contenant entre 5 % et 60 % poids de mono-oléfines, entre 50 et 6000 ppm poids de composés soufrés et entre 10 et 1000 ppb d'arsenic.

## Patentansprüche

1. Katalytisches Adsorptionsmittel für Arsen, wobei das Adsorptionsmittel mindestens ein Metall M1 aus der Gruppe VIB und mindestens zwei Metalle M2 und M3 aus der Gruppe VIII, die auf einen porösen Träger abgeschieden sind, umfasst, wobei es sich bei dem Metall M1 aus der Gruppe VIB um Molybdän handelt, es sich bei dem Metall M2 um Cobalt handelt und es sich bei dem Metall M3 um Nickel handelt, wobei das Molverhältnis der Metalle (M2+M3)/Ml zwischen 1 und 6 liegt und wobei der Gehalt an Metall M1 in Oxidform zwischen 4 und 10 Gew.-%, bezogen auf das Gesamtgewicht des Adsorptionsmittels, liegt, der Gehalt an Metall M2 in Oxidform zwischen 1 und 10 Gew.-%, bezogen auf das Gesamtgewicht des Adsorptionsmittels, liegt und der Gehalt an Metall M2 in Oxidform zwischen 5 und 15 Gew.-%, bezogen auf das Gesamtgewicht des Adsorptionsmittels, liegt.

2. Adsorptionsmittel nach dem vorhergehenden Anspruch, wobei das Molverhältnis der Metalle M2/M3 zwischen 0,05 und 2 liegt.

3. Adsorptionsmittel nach einem der vorhergehenden Ansprüche, das außerdem Phosphor umfasst.

4. Adsorptionsmittel nach dem vorhergehenden Anspruch, wobei der Gehalt an Phosphor in Oxidform zwischen 0,2 und 6 Gew.-%, bezogen auf das Gesamtgewicht des Adsorptionsmittels, liegt.

5. Verfahren zur Hydrodesulfurierung eines Kohlenwasserstoff-Einsatzstoffs, bei dem man den Kohlenwasserstoff-Einsatzstoff in Gegenwart von Wasserstoff mit dem katalytischen Adsorptionsmittel für Arsen nach einem der vorhergehenden Ansprüche in Kontakt bringt.

6. Verfahren nach dem vorhergehenden Anspruch, wobei das katalytische Adsorptionsmittel vor seiner Verwendung bei dem Hydrodesulfurierungsverfahren einer Calcinierungsbehandlung unterworfen wird.

7. Verfahren nach dem vorhergehenden Anspruch, wobei das calcinierte katalytische Adsorptionsmittel außerdem vor seiner Verwendung bei dem Hydrodesulfurierungsverfahren einer Sulfurierungsbehandlung unterworfen wird.

8. Verfahren nach dem vorhergehenden Anspruch, bei dem die Sulfurierung des betreffenden Metalls so durchgeführt wird, dass das Molverhältnis zwischen dem auf dem katalytischen Adsorptionsmittel vorliegenden Schwefel S und dem betreffenden Metall mindestens gleich 60 % des der vollständigen Sulfurierung des betreffenden Metalls entsprechenden theoretischen Molverhältnisses ist.

9. Verfahren nach einem der Ansprüche 5 bis 8, bei dem das Inkontaktbringen bei einer Arbeitstemperatur zwischen 200 und 400 °C, einem Arbeitsdruck zwischen 0,2 und 5 MPa und einem Verhältnis der Durchflussrate von Wasserstoff zur Durchflussrate von Kohlenwasserstoff-Einsatzstoff zwischen 50 und 800 Nm³/m³ erfolgt.

10. Verfahren nach einem der Ansprüche 5 bis 9, das außerdem einen oder mehrere zusätzliche Hydrodesulfurierungsschritte umfasst, bei dem bzw. denen man den Austragsstrom aus dem Inkontaktbringen des Kohlenwasserstoffs-Einsatzstoffs mit dem katalytischen Adsorptionsmittel mit mindestens einem weiteren Hydrodesulfurierungskatalysator in Kontakt bringt.

11. Verfahren nach dem vorhergehenden Anspruch, derart, dass das Verhältnis des Volumens des katalytischen Adsorptionsmittels zum Volumen des weiteren Hydrodesulfurierungskatalysators bzw. der weiteren Hydrodesulfurierungskatalysatoren zwischen 4 und 50 % liegt.

12. Verfahren nach einem der Ansprüche 5 bis 11, wobei es sich bei dem Kohlenwasserstoff-Einsatzstoff um ein durch katalytisches Cracken erhaltenes Benzin handelt, das zwischen 5 und 60 Gew.-% Monoolefine, zwischen 50 und 6000 Gew.-ppm Schwefelverbindungen und zwischen 10 und 1000 ppb Arsen umfasst.

## Claims

1. Catalytic adsorbent for arsenic, the said adsorbent comprising at least one metal M1 from Group VIb and at least two metals M2 and M3 from Group VIII deposited on a porous support, in which the metal M1 from Group VIb is molybdenum, the metal M2 is cobalt and the metal M3 is nickel, in which the molar ratio of the metals (M2 + M3)/M1 is between 1 and 6, and in which the content of metal M1 in the oxide form is between 4 and 10% by weight, with respect to the total weight of the adsorbent, the content of metal M2 in the oxide form is between 1 and 10% by weight, with respect to the total weight of the adsorbent, and the content of metal M3 in the oxide form is between 5 and 15% by weight, with respect to the total weight of the adsorbent.

2. Adsorbent according to the preceding claim, in which the molar ratio of the metals M2/M3 is between 0.05 and 2.

3. Adsorbent according to either one of the preceding claims, additionally comprising phosphorus.

4. Adsorbent according to the preceding claims, in which the content of phosphorus in the oxide form is between 0.2 and 6% by weight, with respect to the total weight of the said adsorbent.

5. Process for the hydrodesulfurization of a hydrocarbon feedstock, in which the hydrocarbon feedstock is brought into contact, in the presence of hydrogen, with the catalytic adsorbent for arsenic according to one of the preceding claims.

6. Process according to the preceding claim, in which the catalytic adsorbent is subjected to a calcination treatment prior to its use in the hydrodesulfurization process.

7. Process according to the preceding claim, in which the calcined catalytic adsorbent is additionally subjected to a sulfidation treatment before its use in the hydrodesulfurization process.

8. Process according to the preceding claim, in which the sulfidation of the metal under consideration is carried out so that the molar ratio of the sulfur S present on the catalytic adsorbent to the metal under consideration is at least equal to 60% of the theoretical molar ratio corresponding to the complete sulfidation of the said metal under consideration.

9. Process according to one of Claims 5 to 8, in which the contacting operation is carried out at an operating temperature of between 200 and 400°C, an operating pressure of between 0.2 and 5 MPa and a ratio of the hydrogen flow rate to the hydrocarbon feedstock flow rate of between 50 and 800 Nm³/m³.

10. Process according to one of Claims 5 to 9, additionally comprising one or more additional hydrodesulfization stages in which the effluent resulting from the operation in which the hydrocarbon feedstock is brought into contact with the catalytic adsorbent is brought into contact with at least one other hydrodesulfurization catalyst.

11. Process according to the preceding claim, such that the ratio of volume of the said catalytic adsorbent with respect to the volume of the said other hydrodesulfurization catalyst(s) is between 4 and 50%.

12. Process according to any one of Claims 5 to 11, in which the hydrocarbon feedstock is a catalytic cracking petroleum containing between 5 and 60% by weight of monoolefins, between 50 and 6000 ppm by weight of sulfur compounds and between 10 and 1000 ppb of arsenic.
